# EUROPÄISCHE PATENTSCHRIFT

(11) **EP 1 106 914 B1**
(45) Veröffentlichungstag und Bekanntmachung des Hinweises auf die Patenterteilung: **11.09.2002**
(21) Anmeldenummer: 00126262.5
(22) Anmeldetag: 01.12.2000
(51) Int. Cl.: F21V 8/00

(54) **Anordnung von lichtabstrahlenden plattenförmigen Elementen**
Flat light-emitting elements system
Système à éléments luminescents plats

(30) Priorität: 09.12.1999 DE 29921689 U; 07.08.2000 DE 10039095
(43) Veröffentlichungstag der Anmeldung: 13.06.2001
(60) Teilanmeldung: 01123199.0
(73) Patentinhaber: Emde, Thomas, 60389 Frankfurt/Main (DE); Pohl, Heinrich Robert, 50769 Köln (DE)
(72) Erfinder: Emde, Thomas, 60389 Frankfurt/Main (DE); Pohl, Heinrich Robert, 50769 Köln (DE)
(74) Vertreter: Fritz, Edmund Lothar, Dipl.-Chem.

(56) Entgegenhaltungen:
- DE-A- 19 755 658
- GB-A- 2 241 056

## Beschreibung

Die vorliegende Erfindung betrifft eine Anordnung von lichtabstrahlenden plattenförmigen Elementen, bei der wenigstens einem plattenförmigen Element wenigstens ein Leuchtmittel zugeordnet ist, welches von der Stirnseite her Licht in das plattenförmige Element hinein abstrahlt und dieses Licht als Streulicht über die Fläche der Platte im rechten Winkel zur Einstrahlrichtung abgegeben wird, wobei diese Anordnung wenigstens zwei vorzugsweise mehrere rasterartig in Längs- und Querreihen angeordnete plattenförmige Elemente der genannten Art umfasst, wobei die plattenförmigen Elemente in ein- oder mehrteiligen Profilrahmen gehaltert sind.

Lichtabstrahlende plattenförmige Elemente der vorgenannten Art, bei denen zum Beispiel über Leuchtstofflampen, LED's oder andere Leuchtmittel über die Stirnseite, das heißt die Kante der Platte in die Platte eingestrahlt wird und dann das Licht über die Fläche der Platte, also senkrecht zur Einstrahlrichtung abgestrahlt wird, sind als solche aus dem Stand der Technik bekannt. Meistens werden diese , plattenförmigen Elemente für beleuchtete Werbedisplays eingesetzt, bei denen sich zum Beispiel auf der flächigen Seite ein Bild, zum Beispiel ein Plakat, und/oder Schriftinformation befindet, die dann hinterleuchtet wird. Dadurch, daß die Lichteinstrahlung von der Stirnseite (Kantenseite) des plattenförmigen Elements her erfolgt, lassen sich diese Werbedisplays sehr flach bauen.

Aus der DE 197 55 658 A1 ist eine Leuchte mit einer Anordnung von lichtabstrahlenden plattenförmigen Elementen der eingangs genannten Art bekannt. Bei dieser Leuchte handelt es sich um eine Deckenpendelleuchte, bei der ein Teil des Lichts nach oben abgegeben wird. Bei dieser Leuchte sind zwei Längsreihen von plattenförmigen Elementen vorhanden, die an einen Steg grenzen, wobei kein Zwischenraum verbleibt. Betriebsmittel für die Leuchte, wie z. B. Vorschaltgeräte sind in einem als Hohlkörper ausgebildeten Längsträger oberhalb der Ebene der plattenförmigen Elemente untergebracht, wodurch die Bauhöhe der Leuchte erhöht wird. Die in Längsrichtung gesehen hintereinander liegenden plattenförmigen Elemente grenzen bei dieser Leuchte unmittelbar aneinander.

Im Bereich der allgemeinen Beleuchtung von Räumen in Gebäuden sind sogenannte Lichtdecken bekannt, das heißt Deckeneinbauleuchten, die in einer größeren Anzahl rasterförmig meist in Längs- und Querreihen angeordnet sind und bei denen das Leuchtmittel, zum Beispiel Leuchtstoffröhren, oberhalb von lichtdurchlässigen Platten angeordnet ist, so dass sich die gesamte Raumdecke oder Teile davon flächig beleuchten lassen. Bei diesen Lichtdecken ist es bislang zur Erzielung einer gleichmäßigen als angenehm empfundenen Beleuchtungswirkung notwendig, das Leuchtmittel, das heißt meist Leuchtstoffröhren in einem ausreichenden Abstand oberhalb der lichtdurchlässigen Platten anzuordnen. Dadurch wird ein Schattenwurf vermieden und die einzelne Leuchtstofflampe ist als Lichtquelle für den Betrachter von unten her nicht sichtbar. Es ist also für den Abstand zwischen dem Leuchtmittel und der lichtdurchlässigen Platte notwendig, eine sogenannte Streutiefe einzuhalten. Um dies zu gewährleisten, werden die lichtdurchlässigen Platten durch Abhängevorrichtungen von der eigentlichen Raumdecke, die eine feste Decke zum Beispiel aus Beton ist, abgehängt und das Leuchtmittel wird zwischen der festen Raumdecke und mit ausreichendem Abstand oberhalb der lichtdurchlässigen Platte befestigt. In der Regel haben solche Deckeneinbauleuchtensysteme insgesamt eine Einbautiefe gerechnet von der festen Raumdecke aus von etwa 25cm oder mehr. Dies bedeutet, daß man relativ viel Raum verliert beim Einbau dieser herkömmlichen Lichtdeckensysteme.

Die Aufgabe der vorliegenden Erfindung besteht demgegenüber darin, eine Anordnung von lichtabstrahlenden plattenförmigen Elementen für Raumdecken beziehungsweise Gebäudedecken zu schaffen, die mit einer wesentlich geringeren Einbautiefe auskommt.

Die Lösung dieser Aufgabe liefert eine erfindungsgemäße Anordnung von lichtabstrahlenden plattenförmigen Elementen mit den Merkmalen des Hauptanspruchs.

Erfindungsgemäß wird ein Leuchtmittel verwendet, welches einem plattenförmigen Element zugeordnet ist und von der Stirnseite her Licht in das plattenförmige Element hinein abstrahlt, wobei das Licht aber als Streulicht über die Fläche der Platte im rechten Winkel zur Einstrahlrichtung abgegeben wird. Die plattenförmigen Elemente, in die das Licht eingestrahlt wird, geben das Licht im rechten Winkel zur Einstrahlrichtung nach unten hin ab und die plattenförmigen Elemente bilden selbst die Raumdecke beziehungsweise Gebäudedecke. Dadurch hat der Betrachter den Eindruck einer flächigen gleichmäßig lichtabgebenden Raumdecke oder Gebäudedecke. Das Leuchtmittel befindet sich nicht mit Abstand über dem plattenförmigen Element sondern neben diesem in gleicher Höhe und strahlt in die Stirnseite (Kante) des plattenförmigen Elements ein. Dadurch ist es nicht notwendig, den zuvor genannten Streulichtabstand einzuhalten, um das Leuchtmittel für den Betrachter unterhalb der Raumdecke beziehungsweise Gebäudedecke unsichtbar zu machen. Es wird also ganz erheblich die Einbautiefe reduziert. Die Einbautiefe lässt sich auf nur wenige Zentimeter reduzieren je nach Stärke der verwendeten plattenförmigen Elemente und nach Art des Leuchtmittels.

Die für eine erfindungsgemäße Anordnung verwendbaren plattenförmigen Elemente können beispielsweise im wesentlichen Acrylplatten sein, die vorzugsweise aus einem opaken Material bestehen oder die an der lichtabgebenden Seite (Flachseite) mit einem Punktraster bedruckt sein können.

Als Leuchtmittel für eine erfindungsgemäße Anordnung von lichtabstrahlenden plattenförmigen Elementen kommen insbesondere Leuchtstofflampen in Betracht.

Die erfindungsgemäße Aufgabenlösung sieht vor, daß die lichtabstrahlenden plattenförmigen Elemente in ein- oder mehrteiligen Profilrahmen gehaltert sind, die sich entsprechend dem rasterförmigen Aufbau der Anordnung in Längs- und in Querrichtung erstrecken. Diese Profilrahmen werden vorzugsweise auch dazu verwendet, das Leuchtmittel so aufzunehmen, daß es nach unten hin kein Licht abstrahlen kann, so daß das Leuchtmittel von unterhalb der Decke für den Betrachter nicht sichtbar ist, sondern nur das beleuchtete plattenförmige Element. Beispielhafte Formen für solche einteilig oder mehrteilige Profilrahmen werden später anhand der Ausführungsbeispiele unter Bezugnahme auf die Zeichnungen näher beschrieben.

Die erfindungsgemäße Anordnung von lichtabstrahlenden plattenförmigen Elementen muß nicht selbst für Licht durchlässig sein, dann wenn das Leuchtmittel ausgeschaltet ist, das heißt die Anordnung muß keine gläsern wirkende Decke bilden. Man kann die Anordnung ebenso gut über Abhängevorrichtungen unterhalb einer festen lichtundurchlässigen Raumdecke beziehungsweise Gebäudedecke befestigen. Auch bei dieser möglichen Variante ist der Vorteil gegeben, daß nur eine sehr geringe Einbautiefe erforderlich ist, so dass im Vergleich zu den bisher bekannten Lichtdeckensystemen erheblich niedrigere Abhängevorrichtungen verwendet werden können.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung der Ausführungsbeispiele.

Die vorliegende Erfindung wird nachfolgend anhand von Ausführungsbeispielen unter Bezugnahme auf die beiliegenden Zeichnungen näher beschrieben. Dabei zeigen
- Fig. 1: eine Unteransicht auf einen insgesamt vier Felder umfassenden Teilbereich einer erfindungsgemäßen Lichtdecke;
- Fig. 2: eine Schnittansicht durch die Lichtdecke, gesehen in Richtung der Pfeile II-II in Fig. 1;
- Fig. 3: eine Schnittansicht durch eine den Trägerprofilen zugeordnete Profilabdeckung;
- Fig. 4: eine Schnittansicht, gesehen in Richtung der Pfeile IV-IV in Fig. 1;
- Fig. 5: eine Schnittansicht durch eine den Querprofilen des Verkleidungssystems zugeordnete Profilabdeckung,
- Fig. 6: eine perspektivische Ansicht einer erfindungsgemäßen Lichtdecke gemäß einem anderen Ausführungsbeispiel, wobei bei dieser Variante die Lichtdecke für von oben her einfallendes Licht durchlässig ist.

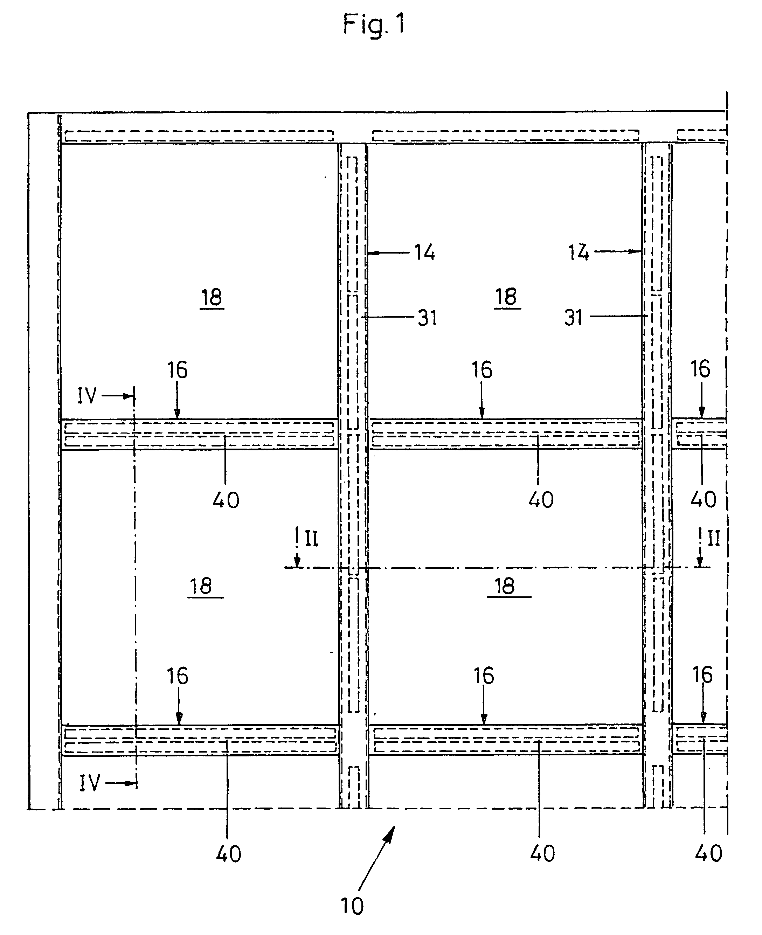

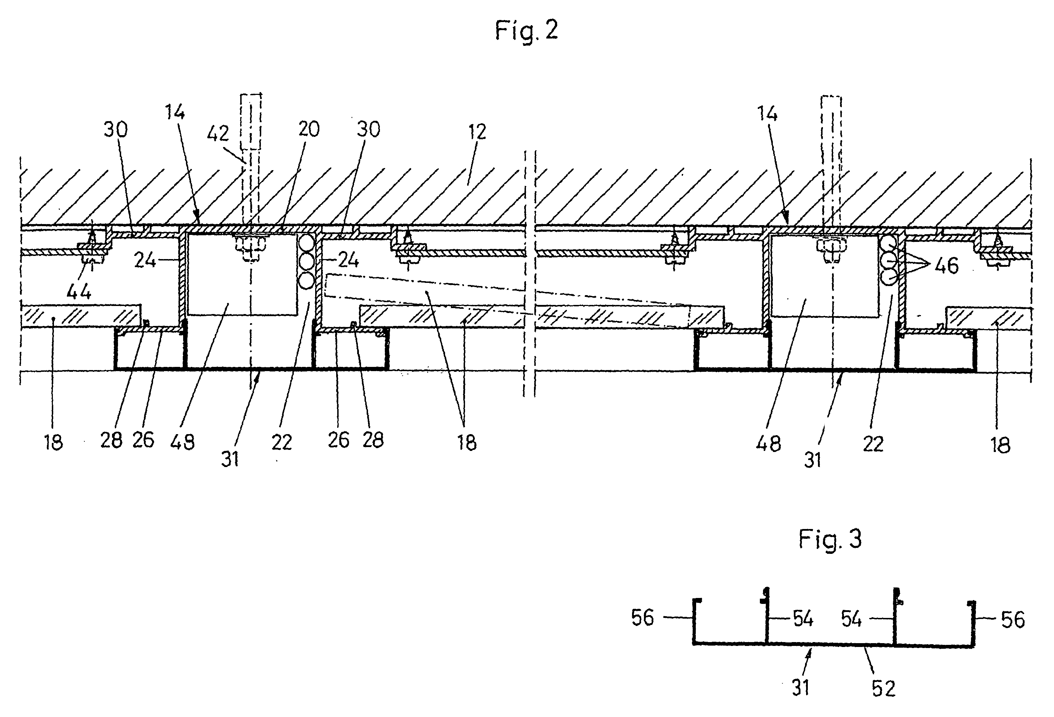

Die in den Fig. 1 bis 5 als erstes Ausführungsbeispiel für ein erfindungsgemäßes lichtabstrahlendes Verkleidungssystem dargestellte Lichtdecke 10 besteht in ihren lichtabstrahlenden Bereichen aus in relativ geringem Abstand unterhalb der Rohbaudecke 12 eines Gebäudes durch ein System von metallischen Halterungsprofilen 14, 16 gehalterten dünnen Platten 18 aus lichtdurchlässigem Kunststoff, z.B. Acrylglas, (Polymethylacrylat; PMMA). Die Halterungsprofile werden von mit Abstand von und parallel zueinander verlaufenden, an der zu verkleidenden Gebäudewand, d.h. hier an der Decke 12, befestigbaren Tragprofilen 14 und mit Abstand zwischen benachbarten Tragprofilen 14 anbringbaren Querprofilen 16 gebildet, die ein Rahmenwerk mit einer Vielzahl von zwischen den Halterungsprofilen gelegenen Feldern bilden, welche durch die Platten 18 geschlossen sind. Wie in Fig. 2 ersichtlich ist, sind die im speziellen Fall als Aluminium-Druckgussprofile ausgebildeten Tragprofile 14 als langgestreckte Kanalprofile mit einem deckenseitig vorgesehenen, im wesentlichen ebenflächigen Befestigungs-Flanschabschnitt 20, zwei mit Abstand von den Rändern des Flanschabschnitts 20 rechtwinklig vortretenden und zwischen sich einen Installationskanal 22 bildenden streifenförmigen Wandabschnitten 24 und an den deckenabgewandten Rändern der Wandabschnitte 24 jeweils voneinander wegweisend angeordnete deckenparallele streifenförmigen Platten-Halterungsabschnitte 26 ausgebildet. Auf den deckenzugewandten Randbereichen der Halterungsabschnitte 26 sind die Ränder der dünnen Platten 18 gehalten, wobei jeweils eine niedrige, von der deckenzugewandten Flachseite der Halterungsabschnitte 26 vortretende Längsrippe 28 eine deckenparallele Verschiebung der auf den Halterungsabschnitten 26 aufgelagerten Platten 18 verhindert.

Parallel zur den Platten-Halterungsabschnitten 26 in Richtung zum Befestigungs-Flanschabschnitt 20 versetzt sind an den streifenförmigen Wandabschnitten 24 jeweils in die gleiche Richtung wie die Halterungsabschnitte 26 weisende streifenförmige Anschlussabschnitte 30 angesetzt, deren freie Randbereiche in parallelem Abstand von der zu verkleidenden Decke 12 verlaufen. Der Installationskanal 22 ist durch eine auf seine offene Vorderseite aufrastbare Profilabdeckung 31 verschliessbar, die in Fig. 3 gesondert im Querschnitt dargestellt ist.

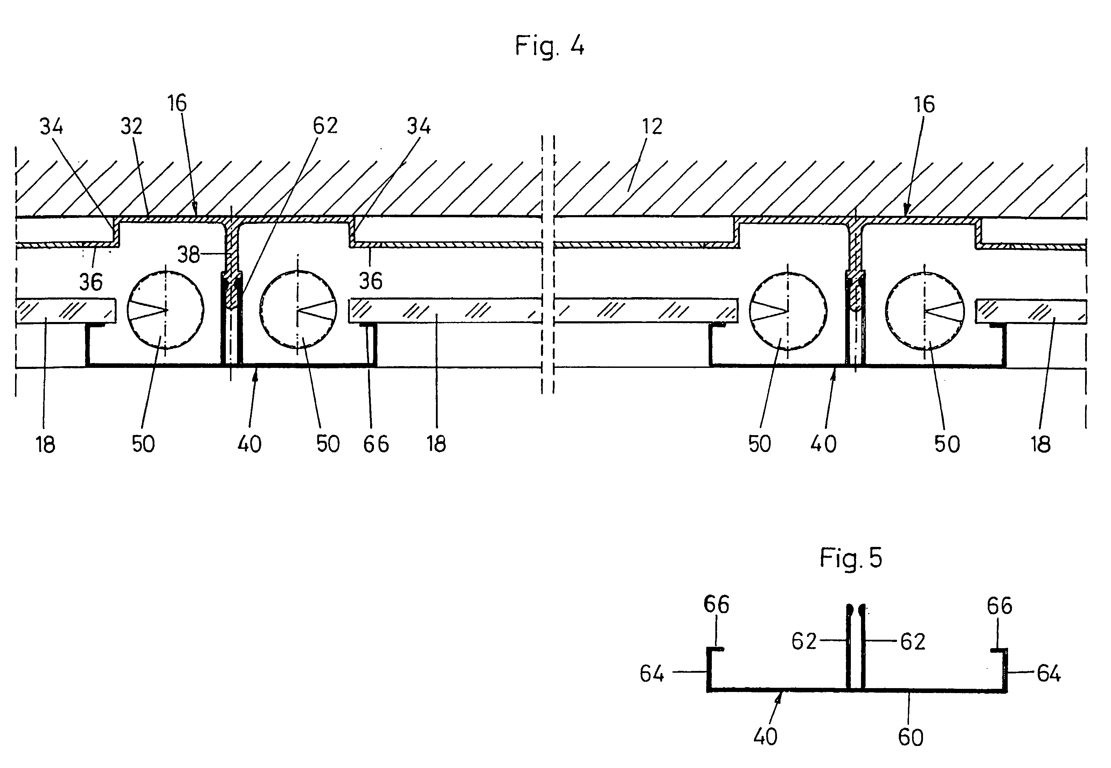

Die in Fig. 4 im Schnitt dargestellten Querprofile 16 weisen ebenfalls einen deckenseitig vorgesehenen langgestreckten, im wesentlichen ebenen Auflage-Flanschabschnitt 32 auf, an dessen seitlichen Rändern im wesentlichen rechtwinklig vortretende niedrige streifenförmige Wandabschnitte 34 angesetzt sind, an deren deckenabgewandten Rändern jeweils in entgegengesetzte Richtung voneinander wegweisende parallel zu den Flanschabschnitten 32 verlaufende Befestigungsabschnitte 36 angesetzt sind, wobei etwa mittig zwischen den streifenförmigen Wandabschnitten ein rechtwinklig vortretender Rippenabschnitt 38 vom Auflage-Flanschabschnitt 32 vortritt, auf dessen flanschabschnittsabgewandtem freien Rand jeweils eine nachstehend noch in Verbindung mit Fig. 5 beschriebene Profilabdeckung 40 befestigbar ist.

Die Tragprofile können in der in Fig. 2 angedeuteten Weise mit der deckenzugewandten Fläche des Befestigungs-Flanschabschnitts 20 an der Decke anliegend mit Metalldübeln 42 befestigt werden.

Dagegen werden die Querprofile 16 jeweils in ihrem Endbereich an benachbarten Tragprofilen 14 befestigt, wofür die streifenförmigen Anschlussabschnitte 30 der Tragprofile 14 und die Befestigungsabschnitte 36 der Querprofile 16 in der bestimmungsgemäßen Montagestellung an der Decke 12 in Bezug auf ihren Abstand von der Decke derart unterschiedlich bemessen sind, dass die Enden der Befestigungsabschnitte der Querprofile in bündiger Übereinanderlage mit den streifenförmigen Anschlussabschnitten der jeweils zugeordneten Tragprofile stehen, so dass die Abschnitte in den übereinander liegenden Bereichen, z.B. durch die in Fig. 2 gezeigten Schrauben 44 miteinander verbunden werden können.

Die von den Tragprofilen 14 und den Querprofilen 16 gebildeten Felder werden dann mit den Platten 18 geschlossen, indem diese in der in Fig. 2 gestrichelt angedeuteten Weise schräg in den oberhalb der Platten-Halterungsabschnitte 26 gebildeten, von den Halterungsprofilen umschlossenen Raum eingeschoben und dann auf der deckenzugewandten oberen Seite der Platten-Halterungsabschnitte 26 aufgesetzt werden. Durch die Längsrippen 28 werden die Platten 18 in der bestimmungsgemäßen Montagestellung gegen horizontale Verschiebung gesichert gehalten. Im vorliegenden Fall, in welchem das Verkleidungssystem unter der Decke 12 eines Gebäudes montiert ist, ist eine zusätzliche Befestigung der Platten 18 an den Halterungsprofilen nicht erforderlich. Wenn andererseits senkrechte Wände in Gebäuden oder äußere Fassaden von Gebäuden in der erfindungsgemäßen Weise verkleidet werden sollen, müssen die Platten zusätzlich an den Tragprofilen 14 befestigt werden, wofür dann - hier nicht gezeigte - Befestigungsmittel vorgesehen werden müssen, mit denen die auf den Platten-Halterungsabschnitten 26 aufliegenden Bereiche der Platten 18 mit den Halterungsabschnitten 26 verbunden werden. Hierzu können beispielsweise von der deckenabgewandten Unterseite der Platten-Halterungsabschnitte 28 aus betätigbare Klemmverbinder verwendet werden.

Die zwischen den Wandabschnitten 24 der Tragprofile gebildeten Installationskanäle 22 stehen für die Verlegung von elektrischen Leitungen 46 und weitere Starter oder Ansteuerorgane, z.B. Vorschaltgeräte für in den Querprofilen 16 angeordnete Leuchtstoffröhren 50 zur Verfügung. In Fig. 4 ist die Lage solcher Leuchtstoffröhren 50 schematisch dargestellt, wobei erkennbar ist, dass diese so in den Querprofilen 16 gehaltert sind, dass sie in geringem Abstand parallel zur zugewandten Begrenzungskante der Platte 18 ausgerichtet im Querprofil verlaufend gehalten sind. Die in den Querprofilen vorzusehenden Fassungen für die Leuchtstoffröhren 50 sind dabei nicht dargestellt. Das von den Leuchtstoffröhren 50 abgestrahlte Licht wird also in die benachbarten, die Platten 18 begrenzenden Stirnflächen eingestrahlt und dann über die nach unten weisende Flachseite der Platte in den darunter liegenden Raum abgestrahlt, wobei diese Abstrahlung großflächig mit relativ geringer Leuchtdichte erfolgt, so dass eine gleichmäßige Beleuchtung des Raums erhalten wird, ohne dass eine Blendgefahr für die im Raum befindlichen Personen besteht. Durch geeignete Rasterbedruckung der durchsichtigen bzw. lichtdurchlässigen Platten 18 oder auch durch Einlagerung von lichtstreuenden oder reflektierenden Partikeln in die Platte selbst ist die Abstrahlcharakteristik ebenso wie die Transparenz der Platte 18 vorgegebenen Anforderungen anpassbar.

Das System der an der Decke 12 montierten Tragprofile 14 und Querprofile 16 wird nach der Installation der elektrischen Leitung 46, der Vorschaltgeräte 48 und der Leuchtstoffröhren 50 durch die jeweils zugeordneten Profilabdeckungen 31 bzw. 40 verschlossen. Eine den Tragprofilen zugeordnete Profilabdeckung 31 ist in Fig. 3 im Querschnitt dargestellt. Sie weist eine langgestreckte ebenflächige Vorderwand 52 auf, deren Breite etwas größer als die über die freien Ränder der Platten-Halterungsabschnitte 26 gemessene Breite der Tragprofile 14 ist. Von der Rückseite der Vorderwand 52 treten rechtwinklig Stegabschnitte 54 vor, welche mit den den Installationskanal 22 begrenzenden streifenförmigen Wandabschnitten 24 des Tragprofils verrastbar sind. An den gegenüberliegenden Längsrändern der Vorderwand 52 der Profilabdeckung 31 sind zu den Platten-Halterungsabschnitten 26 zurückgekantete Seitenwände 56 angesetzt, deren Höhe so bemessen ist, dass sie in der in Fig. 2 gezeigten bestimmungsgemäßen Montagestellung seitlichen Zwischenraum zwischen der Vorderwand 52 und den Platten-Halterungsabschnitten 26 verschließen.

Auch die in Fig. 5 gezeigte, Profilabdeckung 40 für Querprofile 16 weist eine langgestreckte, im speziellen Fall ebenflächige Vorderwand 60 auf, von deren zum Querprofil 16 weisender Rückseite zwei benachbarte streifenförmige parallele Stegabschnitte 62 vortreten, welche auf dem freien Randbereich des Rippenabschnitts 38 der Querprofile 16 aufrastbar sind. An den seitlichen Rändern der Vorderwand 60 der Profilabdeckung 40 sind dann wieder zum Querprofil 16 weisende umgekantete Seitenwände 64 angesetzt, die sich bis zur Unterseite der Platte 18 erstrecken und mit von ihren freien Enden rechtwinklig aufeinander zu weisenden umgekanteten Randabschnitten 66 an der Platte 18 anlegen. Nach Montage aller Profilabdeckungen 31 und 40 bietet sich dem Betrachter der Lichtdecke der Anblick eines Rahmenwerks aus sich rechtwinklig kreuzenden streifenförmigen Rahmenelementen, welche jeweils lichtabstrahlende rechteckig oder quadratische Fläche umschließen.

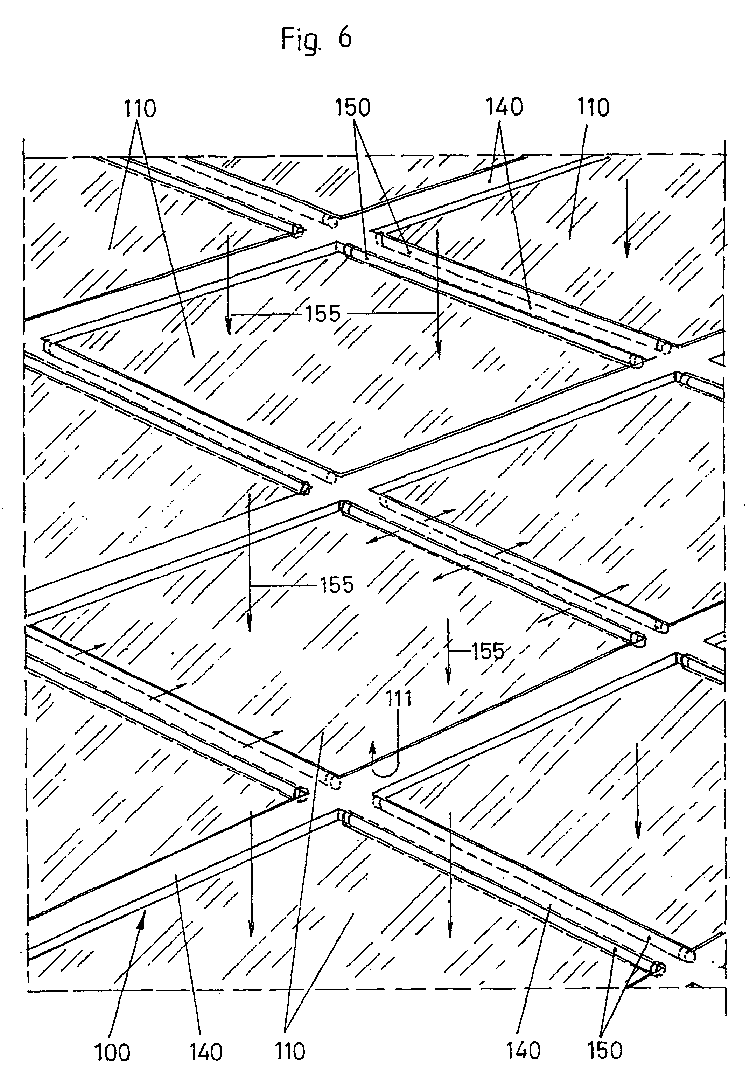

Es wird nun auf Fig. 6 Bezug genommen. Diese Zeichnung zeigt ein weiteres Ausführungsbeispiel in schematisch vereinfachter perspektivischer Ansicht, bei dem die erfindungsgemäße Anordnung als Lichtdecke nicht unterhalb einer festen Raumdecke angeordnet ist, so daß bei ausgeschaltetem Leuchtmittel von oben her einfallendes Licht in Pfeilrichtung durch die lichtdurchlässigen plattenförmigen Elemente hindurch fallen kann. Dadurch kann Tageslicht oder Kunstlicht aus darüberliegenden Räumen genutzt werden zur Beleuchtung des unter der Anordnung liegenden Raums. Die erfindungsgemäße Anordnung kann auch die Gebäudedecke selbst bilden. Es handelt sich dann um eine tagsüber lichtdurchlässige Decke, bei der man mit zunehmender Dunkelheit gegebenenfalls sukzessive durch entsprechende Helligkeitssteuerung künstliches Licht seitlich in die plattenförmigen Elemente einstrahlen und nach unten hin abstrahlen kann zur Raumbeleuchtung. Dies hat den besonderen Vorteil, daß der Übergang vom Einfall des Tageslichts zu dem künstlichen Licht für die in dem Raum befindlichen Personen quasi unmerklich geschieht. Die erfindungsgemäßen plattenförmigen Elemente können so ausgebildet sein, daß sie weißes Licht abgeben, sie können aber auch farbiges Licht abgeben, dadurch daß sie entweder entsprechend bedruckt sind oder daß geeignete Leuchtmittel als farbige Lichtquellen verwendet werden. Man könnte auch die plattenförmigen Elemente ganz oder teilweise entsprechend einfärben.

Die Anordnung aus den plattenförmigen Elementen ist insgesamt in Fig. 6 mit 100 bezeichnet. Die einzelnen plattenförmigen Elemente der Anordnung sind mit 110 bezeichnet. Man kann in Fig. 6 erkennen, daß die plattenförmigen Elemente 110 wiederum rasterartig in Längs- und Querreihen angeordnet sind und daß die plattenförmigen Elemente 110 in Profilrahmen 140 gehaltert sind. Diese Profilrahmen 140 verlaufen in Quer- und in Längsrichtung. Die in einer Richtung verlaufenden Profilrahmen 140 decken das Leuchtmittel, z.B. Leuchtstofflampen 150 ab. Stattdessen können aber beispielsweise auch LED's verwendet werden. Dadurch sind die Leuchtmittel 150 von unten her nicht sichtbar. Die Leuchtmittel 150 strahlen wie bei dem zuvor beschriebenen Ausführungsbeispiel über die Kanten bzw. Stirnseiten das Licht in die plattenförmigen Elemente 110 ein, in denen das Licht dann um 90° umgelenkt und nach unten hin abgegeben wird, wenn das Leuchtmittel 150 an ist. Wenn das jeweilige Leuchtmittel 150 dagegen ausgeschaltet ist, dann sind die plattenförmigen Elemente 110 von oben nach unten durchlässig, das heißt senkrecht zur Einstrahlrichtung des künstlichen Lichts welches von den Leuchtmitteln kommt, z.B. für Tageslicht welches von oberhalb der plattenförmigen Elemente 110 her eingestrahlt wird. Dieses Tageslicht ist in der Zeichnung Fig. 6 durch Pfeile 155 angedeutet und fällt durch die plattenförmigen Elemente 110 hindurch und kann den darunter liegenden Raum erhellen. Um einen solchen Durchfall von Tageslicht zu ermöglichen, kann man beispielsweise die unterseitigen Lichtaustrittsflächen 111 der plattenförmigen Elemente 110 in einem Punktraster weiß oder farbig bedrucken, wobei das Punktraster jedoch nicht zu dicht ist und einen ausreichenden Lichtdurchtritt des Tageslichts ermöglicht. Andererseits hat das Punktraster bei geeigneter Materialwahl der plattenförmigen Elemente 110, die z.B. aus Acrylglas sein können, die gewünschte Streuwirkung, wenn bei fehlendem Tageslicht nach Einschaltung des Leuchtmittels 150 künstliches Licht seitlich in das plattenförmige Element 110 eingestrahlt, dort um 90° umgelenkt und dann als Streulicht nach unten abgegeben wird.

## Patentansprüche

1. Anordnung von lichtabstrahlenden plattenförmigen Elementen (110) bei der wenigstens einem plattenförmigen Element wenigstens ein Leuchtmittel (150) zugeordnet ist, welches von der Stirnseite her Licht in das plattenförmige Element hinein abstrahlt und dieses Licht als Streulicht über die Fläche der Platte im rechten Winkel zur Einstrahlrichtung abgegeben wird, wobei diese Anordnung wenigstens zwei vorzugsweise mehrere rasterartig in Längs- und Querreihen angeordnete plattenförmige Elemente der genannten Art umfasst, wobei die plattenförmigen Elemente in ein- oder mehrteiligen Profilrahmen (140) gehaltert sind,
**dadurch gekennzeichnet, dass** sich die Profilrahmen (140, 14, 16) entsprechend dem rasterförmigen Aufbau der Anordnung in Längs- und Querrichtung erstrecken
und die Anordnung mit den plattenförmigen Elementen entweder über Abhängevorrichtungen (38) unterhalb einer festen lichtundurchlässigen Raumdecke (12) beziehungsweise Gebäudedecke befestigt ist oder diese selbst die Raumdecke beziehungsweise Gebäudedecke bildet.

2. Anordnung von lichtabstrahlenden plattenförmigen Elementen nach Anspruch 1, **dadurch gekennzeichnet, dass** die in einer Richtung verlaufenden Profilrahmen (140) beziehungsweise Halterungsprofile (16) das Leuchtmittel (50, 150) abdecken und die in der anderen Richtung verlaufenden Halterungsprofile (14) als Tragprofile ausgebildet sind und zwischen sich einen Installationskanal (22) bilden.

3. Anordnung von lichtabstrahlenden plattenförmigen Elementen nach einem der Ansprüche 1 oder 2, **dadurch gekennzeichnet**, bei der die die Raumdecke beziehungsweise Gebäudedecke bildende Anordnung (100) eine Einbautiefe von weniger als 10cm, vorzugsweise weniger als 6cm aufweist.

4. Anordnung von lichtabstrahlenden plattenförmigen Elementen nach einem der Ansprüche 1 bis 3, **dadurch gekennzeichnet, daß** die plattenförmigen Elemente (110) im wesentlichen Acrylplatten sind, die aus einem opaken Material bestehen oder an der lichtabgebenden Seite mit einem Punktraster bedruckt sind.

5. Anordnung von lichtabstrahlenden plattenförmigen Elementen nach einem der Ansprüche 1 bis 4, **dadurch gekennzeichnet, daß** als Leuchtmittel wenigstens eine in die Stirnseite des plattenförmigen Elements einstrahlende Leuchtstofflampe (150) vorgesehen ist.

6. Anordnung von lichtabstrahlenden plattenförmigen Elementen nach einem der Ansprüche 1 bis 5, **dadurch gekennzeichnet, daß** das Leuchtmittel (150) durch Profilrahmen (140) der Halterung nach unten zum Raum hin abgedeckt ist.

7. Anordnung von lichtabstrahlenden plattenförmigen Elementen nach einem der Ansprüche 1 bis 6, **dadurch gekennzeichnet, daß** diese über Abhängevorrichtungen (38) unterhalb einer festen lichtundurchlässigen Raumdecke (12) beziehungsweise Gebäudedecke befestigbar ist.

## Claims

1. Arrangement of light-emitting panel-shaped elements (110) in which at least one panel-shaped element is assigned at least one illuminating means (150), which emits light into the panel-shaped element from the end face and this light is given off as diffused light over the surface area of the panel at right angles to the direction of irradiation, this arrangement comprising at least two, preferably more, panel-shaped elements arranged like a grid in longitudinal and transverse rows, the panel-shaped elements being secured in one-part or multi-part profile frames (140), **characterized in that** the profile frames (140, 14, 16) extend in a way corresponding to the grid-shaped construction of the arrangement in the longitudinal and transverse directions and the arrangement with the panel-shaped elements is either fastened by means of suspension devices (38) underneath a fixed light-impermeable room ceiling (12) or building ceiling or itself forms the room ceiling or building ceiling.

2. Arrangement of light-emitting panel-shaped elements according to Claim 1, **characterized in that** the profile frames (140) or securing profiles (16) running in one direction cover the illuminating means (50, 150) and the securing profiles (14) running in the other direction are designed as load-bearing profiles and form between them an installation duct (22).

3. Arrangement of light-emitting panel-shaped elements according to either of Claims 1 and 2, **characterized in that** the arrangement (100) forming the room ceiling or building ceiling has an installation depth of less than 10 cm, preferably less than 6 cm.

4. Arrangement of light-emitting panel-shaped elements according to one of Claims 1 to 3, **characterized in that** the panel-shaped elements (110) are essentially acrylic panels, which consist of an opaque material or are printed with a pattern of dots on the side giving off light.

5. Arrangement of light-emitting panel-shaped elements according to one of Claims 1 to 4, **characterized in that** at least one fluorescent lamp (150) emitting into the end face of the panel-shaped element is provided as the illuminating means.

6. Arrangement of light-emitting panel-shaped elements according to one of Claims 1 to 5, **characterized in that** the illuminating means (150) is covered downwards towards the room by profile frames (140) of the securing means.

7. Arrangement of light-emitting panel-shaped elements according to one of Claims 1 to 6, **characterized in that** it can be fastened by means of suspension devices (38) underneath a fixed light-impermeable room ceiling (12) or building ceiling.

## Revendications

1. Système à éléments luminescents plats (110) avec lequel à au moins un élément plat est associé au moins un moyen luminescent (150), lequel émet de la lumière dans l'élément plat depuis le côté frontal et cette lumière est délivrée sous la forme de lumière diffusée sur la surface de la plaque à angle droit par rapport au sens de pénétration, ce système comprenant au moins deux et de préférence plusieurs éléments plats du type mentionné disposés en rangées longitudinales et transversales, les éléments plats étant maintenus dans des cadres profilés (140) en une ou en plusieurs parties, **caractérisé en ce que** les cadres profilés (140, 14, 16) s'étendent dans le sens longitudinal et transversal en fonction de la structure en grille du système et le système avec ses éléments plats est fixé soit par le biais de dispositifs d'accrochage (38) sous un plafond de pièce (12) ou un plafond de bâtiment ne laissant pas passer la lumière, soit forme lui-même le plafond de pièce ou le plafond de bâtiment.

2. Système à éléments luminescents plats selon la revendication 1, **caractérisé en ce que** les cadres profilés (140) ou les profilés de maintien (16) qui s'étendent dans un sens recouvrent le moyen luminescent (50, 150) et les profilés de maintien (14) qui s'étendent dans l'autre direction sont réalisés sous la forme de profilés porteurs et forment entre eux un conduit d'installation (22).

3. Système à éléments luminescents plats selon la revendication 1 ou 2, **caractérisé en ce que** le système (100) formant le plafond de la pièce ou le plafond du bâtiment présente une profondeur montée inférieure à 10 cm, de préférence inférieure à 6 cm.

4. Système à éléments luminescents plats selon l'une des revendications 1 à 3, **caractérisé en ce que** les éléments plats (110) sont essentiellement des panneaux en acrylique qui se composent d'un matériau opaque ou dont le côté diffusant la lumière présente une grille de points imprimée.

5. Système à éléments luminescents plats selon l'une des revendications 1 à 4, **caractérisé en ce que** le moyen luminescent prévu est au moins un tube fluorescent (150) qui émet de la lumière dans le côté frontal de l'élément plat.

6. Système à éléments luminescents plats selon l'une des revendications 1 à 5, **caractérisé en ce que** le moyen luminescent (150) est recouvert par les cadres profilés (140) du support vers le bas en direction de la pièce.

7. Système à éléments luminescents plats selon l'une des revendications 1 à 6, **caractérisé en ce que** celui-ci peut être fixé par le biais de dispositifs d'accrochage (38) sous un plafond de pièce (12) ou un plafond de bâtiment fixe ne laissant pas passer la lumière.
